(19)

Europäisches
Patentamt
European
Patent Office
Office européen
des brevets

(11) **EP 2 101 458 A1**

(12) **EUROPEAN PATENT APPLICATION**

(43) Date of publication:
**16.09.2009 Bulletin 2009/38**

(51) Int Cl.:
*H04L 27/156* (2006.01)  *H04L 27/22* (2006.01)
*H03D 3/00* (2006.01)  *H03M 7/16* (2006.01)

(21) Application number: **08102486.1**

(22) Date of filing: **11.03.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Seiko Epson Corporation**
**Shinjuku-ku**
**Tokyo 163-0811 (JP)**

(72) Inventors:
 • **Lopez Martin, Antonio**
  **31006 Pamplona (ES)**

 • **Gonzalez Carvajal, Ramón**
  **41092 Sevilla (ES)**
 • **Cairo Molins, Josep Ignasi**
  **08190 Sant Cugat del Vallés (Barcelona) (ES)**
 • **Gil Gali, Ignacio**
  **08190 Sant Cugat del Valles (Barcelona) (ES)**
 • **Goni, Amaya**
  **31006 Pamplona (ES)**
 • **Sanchez Rodriguez, Trinidad**
  **41092 Sevilla (ES)**

(74) Representative: **Carpintero Lopez, Francisco et al**
 **Herrero & Asociados, S.L.**
 **Alcalá 35**
 **28014 Madrid (ES)**

(54) **Zero-crossing detector for receiver**

(57) Demodulator for detecting phase or frequency-modulated signals, wherein said signals comprise an in-phase component (i(t)) and a quadrature component (q(t)), said demodulator comprising: a linear combiner (3) for generating a plurality of 2N linear combinations ($i_k(t)$, $q_k(t)$) of said in-phase component (i(t)) and said quadrature component (q(t)), k being a natural number $0 \leq k <$ N-1; the device further comprising: a plurality of 2N amplitude limiters, each of them being placed at the output of each of said 2N linear combinations ($i_k(t)$, $q_k(t)$), for providing a digital code associated to the respective linear combination at the output of which they are placed, wherein said digital code represents a phase quantization sector of said linear combination; decoding means (5) for providing a decoded symbol having M=$\log_2(4N)$ bits, each of said M bits being outputted in parallel; a bank of M flip-flops, placed at the output of the M outputted bits, for delaying said symbol; comparison means (6) for comparing said M-bit decoded symbol to said delayed M-bit decoded symbol; a flip-flop (9) for selecting a most significant bit (out3, outM-1) and for improving synchronization, thus detecting the data signal.

FIG. 6

EP 2 101 458 A1

**Description**

FIELD OF THE INVENTION

The present invention relates to receivers and, more precisely, to zero crossing detectors for receivers.

STATE OF THE ART

When designing wireless receivers, the main limitations are imposed by: minimal power consumption, high integration density and minimal number of external components.

Most of the available choices for the architecture of a receiver can be grouped into two main categories: heterodyne receivers and homodyne (also called direct conversion or Zero-IF) receivers. Heterodyne receivers (including super-heterodyne ones) have a fixed, relatively high intermediate frequency (IF) or two different IF sections. A variant suited to highly integrated receivers is the Low-IF architecture.

Although conventional super-heterodyne receivers achieve high sensitivity, they are not a good solution in terms of power consumption. Furthermore, they require highly selective filters for image rejection and channel selection, which cannot be implemented on chip. Hence, typically external SAW resonators are used.

Concerning Low-IF, although it keeps the signal spectrum out of baseband, thus overcoming DC offsets and flicker noise, which are two important signal degradations typical at baseband frequencies, it involves some severe disadvantages: need for image rejection, high power consumption and sensitivity to I and Q gain/phase mismatch.

Finally, Zero-IF architectures allow at the same time achieving high integration density and low power consumption. Zero-IF receivers are based on the direct conversion of the RF signal to baseband. They feature important advantages, such as not requiring image rejection, because there are not image frequencies since the signal is directly converted to baseband (i.e. there is not intermediate frequency) and the channel filters are simple low-pass filters operating at lower frequencies than band-pass filters required in band-pass channel filtering.

Thus, zero-IF receivers are the most promising choice in terms of cost, integration density and power consumption. However, since the signal is at base-band, it suffers from the already mentioned degradations (DC offset and Flicker noise). The simplest way to get rid of DC offset is to use a simple RC high-pass filter after the mixing stage. This has typically been done for modulations with negligible DC components (like FSK signals with high modulation index) used in paging receivers. However, other types of modulation, such as GFSK, have significant spectral content near DC. As a consequence, high-pass filtering would remove useful signal components, thus increasing the SNR required for a certain BER. These degradations need to be properly addressed.

The choice of the demodulator is one of the most important setups, since its performance has a tremendous impact on the architecture of the receiver. The demodulator determines the minimum SNR required at its input for achieving the target BER, so it directly influences the noise figure (NF) and gain requirements of the receiver. If may also determine the complexity of the gain control strategy, the need for multibit analog-to-digital converters (ADC), the tolerance of AC coupling in the baseband and, in general, the extent to which non-idealities can be tolerated in the receiver (e.g. maximum I/Q mismatch errors). A proper choice of the demodulator can lead to a much simpler receiver and, thus, to significant savings in power consumption.

There are several choices for detection of digital phase or digital frequency modulated signals, such as frequency-shift keying (FSK) modulated signals, for both Low-IF and Zero-IF architectures: all-analog, all-digital and mixed analog-digital ones. All-analog implementations require in general a large amount of power, in the range of several mW, and are thus discarded due to its high power consumption. All-digital detectors are compact, efficient and insensitive to mismatch, and thus typically used in most integrated wireless transceivers. However, they usually require multibit analog-to-digital converters (ADCs) operating at relatively high speed, which feature large power consumption. Therefore, mixed analog-to-digital signal solutions with simple analog and digital circuits are a suitable option.

In order to avoid the already mentioned ADCs, amplitude limiters can be used alternatively. They can be employed when the modulation type does not imply time-varying amplitude, such as modulations having a constant envelope, like GFSK, MSK or BPSK. In other words, they can be employed for detecting digital phase or digital frequency modulated signals. Amplitude limiters are capable of removing any undesired amplitude modulation due to the channel and receiver non-idealities. Amplitude limiters also greatly relax the gain control in the receiver, since for a wide input dynamic range the gain needs not be tuned, and a simple, discrete gain control can be used outside this range. In this case, such gain control needs not to enforce a certain signal level at the detector input, it just needs to make sure that the receiver does not saturate and fulfils the linearity and noise specifications for any received input level. Besides, multi-stage amplitude limiters simplify the design of RSSI (Received Signal Strength Indication) circuits. However, these limiters lead to odd order distortion, which is reflected in the time domain by signal clipping and in the frequency domain by scaled replicas of the original spectrum at frequencies 2k+1 with k integer. Such distortion needs to be removed if the detection is sensitive to it (i.e. if it is based on detecting the undistorted in-phase (I) and quadrature (Q) signals).

This is the case, e.g., in conventional cross-differentiate multiply detectors or in limiter-discriminator detectors. Such distortion can be removed in Low-IF receivers by filtering, since the replicas of the IF spectrum that appear at odd multiples of the intermediate frequency fIF are out of band and can be rejected by a band-pass filter. The main disadvantage is the additional power consumption of such filter. In Zero-IF receivers, however, this cannot be done, since distortion is no longer out of the desired band and cannot be removed by filtering. Hence, in order to use amplitude limiters in Zero-IF receivers the detector must be insensitive to the nonlinear distortion of the limiters, i.e., it must be based on detection of zero-crossings of the incoming signal.

US5469112 discloses a communication device with zero-crossing demodulator, wherein the direction of the phase rotation of the signal vector is detected as it crosses the in-phase (I) and quadrature (Q) axes of the IQ complex plane by a bi-directional counter. The final count of the counter is used by a decision device to establish the content of the received information. However, the power consumption of the counter can become too high, due to the complexity of this implementation. Hence, for high data rate communications, the power consumption is very high. Furthermore, phase detection is done quantizing the phase in only 4 quadrants of the IQ plane, which involves a high rate of errors.

Low-complexity detectors for a zero-IF Bluetooth receiver based on a phase-domain analog-to-digital converter are disclosed by Sohrab Samadian et al, in "Demodulators for a Zero-IF Bluetooth Receiver", IEEE Journal of Solid-State Circuits, Vol. 38, N° 8, August 2003. It discloses a Bluetooth receiver with a stage of Zero-IF down conversion which provides I and Q signals after the reception at the antenna. These signals enter a linear combiner, where linear combinations of the I and Q waveforms with trigonometric weights project the received waveform along eight segment axes. Afterwards, 16 limiting amplifiers are implemented, followed by 16 respective flip-flops which delay each of the outputs of the linear combiners. Finally, a thermometer to binary decoder decodes a 16-bit thermometer code into 4-bits binary one.

However, this implementation presents some drawbacks: it requires one limiting amplifier per each of the I and Q segment axes. This high number of limiters implies a same number of flip-flops. As a consequence, the device size is increased and therefore its power consumption and cost is also increased.

## SUMMARY OF THE INVENTION

It is a primary aim of the present invention to provide a demodulator for detecting digital phase or digital frequency modulated signals, wherein those signals comprise an in-phase component and a quadrature component. The demodulator comprises a linear combiner for generating a plurality of 2N linear combinations from said in-phase component and quadrature component. The demodulator further comprises: a plurality of 2N amplitude limiters, each of them being placed at the output of each of said 2N linear combinations, for providing a digital code associated to the respective linear combination at the output of which they are placed, wherein that digital code represents a phase quantization sector of those linear combinations; decoding means for providing a decoded symbol representing a quantized phase, having $M=\log_2(4N)$ bits, each of those bits being outputted in parallel; a bank of M flip-flops, each of them being placed at the output of each of the M outputted bits, for delaying that M-bit symbol previously outputted; comparison means for comparing that M-bit decoded symbol to said delayed M-bit decoded symbol; a flip-flop placed at the output of the comparison means for selecting a most significant bit, thus detecting the data signal.

Preferably, the said comparison means is a subtractor. Alternatively, it is an adder.

Preferably, the decoding means comprises a thermometer-to-binary decoder.

Also preferably, the digital phase or digital frequency modulated signal is a GFSK signal.

The demodulator can comprise a post-processing stage at the output of the comparison means and/or a synchronization stage.

The invention also provides a zero-IF receiver comprising a demodulator as already indicated. This zero-IF receiver preferably comprises a zero-IF down conversion stage configured for converting a received signal into an in-phase component and a quadrature component. The zero-IF receiver is preferably a wireless receiver.

The advantages of the proposed invention will become apparent in the description that follows.

## BRIEF DESCRIPTION OF THE DRAWINGS

To complete the description and in order to provide for a better understanding of the invention, a set of drawings is provided. Said drawings form an integral part of the description and illustrate a preferred embodiment of the invention, which should not be interpreted as restricting the scope of the invention, but just as an example of how the invention can be embodied. The drawings comprise the following figures:

Figure 1 represents the phase trajectory for binary CPFSK.

Figure 2 shows four possible basic paths in the GMSK phase trajectory.

Figure 3 illustrates a vector representation of a phase modulated signal.

Figure 4 represents the polarity of the in-phase i(t) and quadrature q(t) signals in each quadrant of the IQ-plane.

Figure 5 shows the quantization of the phase in the complex IQ plane.

Figure 6 shows a demodulator according to an embodiment of the invention.

Figure 7 illustrates a phase quantization with 8 axis (N=4).

Figures 8a and 8b illustrate a post-processing stage according to the invention.

Figure 9 shows a demodulator comprising a post-processing stage according to a preferred embodiment of the invention.

Figure 10 shows a simplified diagram of a receiver according to the invention, including the amplification and filtering stages in the signal path.

Figure 11 represents the instantaneous phase of a GMSK modulation of an input datastream.

Figure 12 shows the instantaneous phase at the input and output of the baseband preprocessing section with negligible noise under certain conditions.

Figure 13 shows the instantaneous phase at the input and output of the baseband preprocessing section with negligible noise under different conditions.

Figure 14 shows the instantaneous phase at the input and output of the baseband preprocessing section with negligible noise under different conditions.

Figure 15 shows the instantaneous phase at the input and output of the baseband preprocessing section with negligible noise under different conditions.

Figure 16 shows the performance of four different detectors.

Figure 17 shows the performance of the detectors of figure 16 with delay compensation.

DESCRIPTION OF PREFERRED EMBODIMENTS OF THE INVENTION

The implementation of the present invention can be carried out as follows:

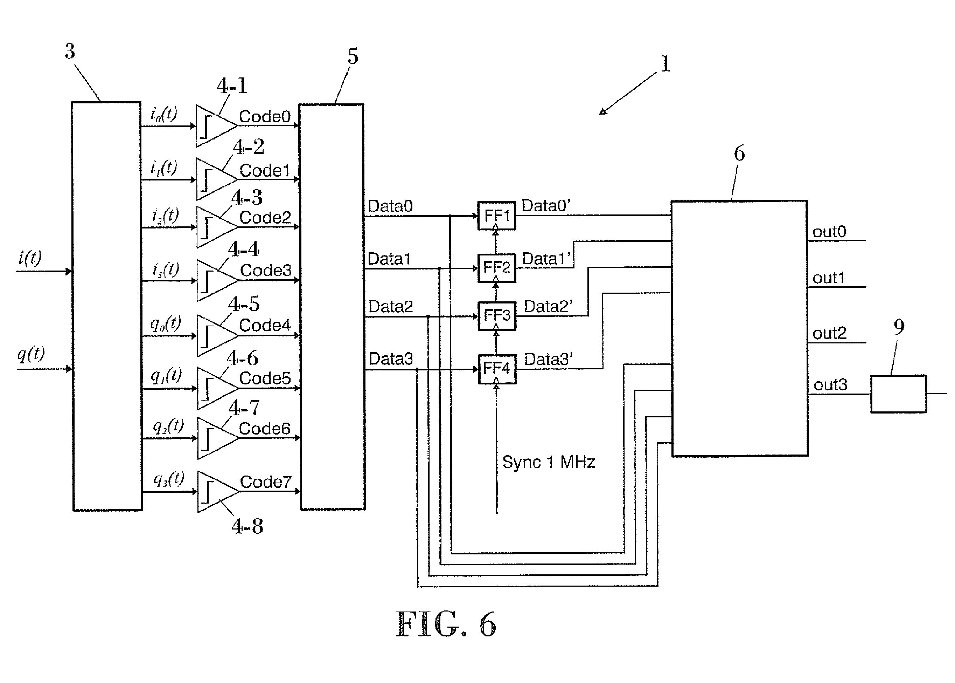

Figure 6 shows a device for data demodulating and detecting according to a preferred embodiment of the invention.

First, a demodulator is selected. The basic operation of this detection method is described as follows:

A frequency-modulated (FM) signal at the input of a receiver can be expressed as follows:

$$s(t) = \sqrt{2S}\cos\left(\omega_{RF}\, t + \phi(t)\right) \qquad (1)$$

where S is the mean signal power, $W_{RF} = 2\pi f_{RF}$ the radian frequency of the transmitter oscillator, and $\phi(t)$ is the instantaneous phase deviation. In an unmodulated carrier $\phi(t)$ is constant. When an FM modulation is applied, $\phi(t)$ is equal to:

$$\phi(t) = 2\pi f_d \int_{-\infty}^{t} m(t)dt \qquad (2)$$

where $f_d$ is the frequency sensitivity of the FM modulator (in Hz/V assuming m(t) in Volts) and m(t) is the modulating signal. In a binary FSK modulation m(t) can be expressed as:

$$m(t) = \sum_{n=-\infty}^{\infty} d_n g(t - nT) \qquad (3)$$

where the data sequence is ....$d_{-2}$ $d_{-1}$ do $d_1$ $d_2$ ... with $d_n \in \{-1,1\}$, $T=1/R_b$ is the bit duration and g(t) is the pulse shaping function. If the maximum value of |m(t)| is 1, then the maximum frequency deviation is $f_d$ and the modulation index is defined as h=2 $f_d$ T = 2 $f_d$ /$R_b$. The shift in $\phi(t)$ due to bit $d_k$ is:

$$\Delta\phi_k = \phi(kT) - \phi(kT - T) = 2\pi f_d \int_{kT}^{kT+T} d_k g(t - kT)dt \qquad (4)$$

In a CPFSK modulation where g(t) is a rectangular pulse (i.e. no pulse shaping) the maximum phase transition is

$$\Delta\phi_k = \phi(kT) - \phi(kT - T) = 2\pi f_d T d_k = \pi h d_k = \begin{cases} \pi h & if \quad d_k = 1 \\ -\pi h & if \quad d_k = -1 \end{cases} \qquad (5)$$

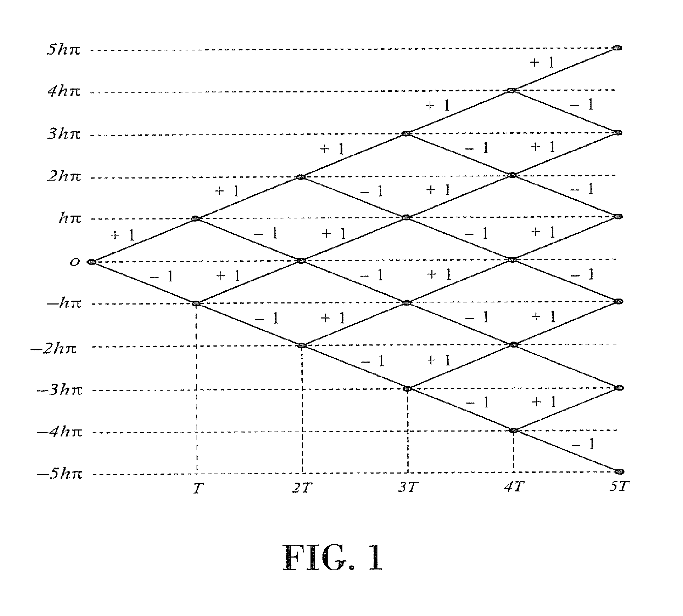

All the possible combinations for the evolution of $\phi(t)$ are shown in figure 1. In a CPFSK modulation with h=0.5 and g(t) a rectangular pulse (i.e. a MSK modulation) therefore the maximum frequency deviation is $f_d$=1/(4T) and thus the maximum phase transition due to bit $d_k$ is $\pm\pi/2$, i.e., a positive phase shift of $\pi/2$ is produced by dk=1 and a negative shift -$\pi/2$ for dk=-1. Note also that in this case, since g(t) is constant this phase increase is produced linearly with time during T, as seen in figure 1.

In a preferred embodiment, the modulation employed is GFSK. In a particular example, GFSK with h=0,5 is employed, so g(t) is a Gaussian pulse shape which smoothes phase variations and thus sharpens the signal spectrum, at the expense of intersymbol interference (ISI). The impulse response of the filter is

$$h(t) = \frac{1}{\sqrt{2\pi}\delta T} e^{\frac{-t^2}{2\delta^2 T^2}} \qquad (6)$$

with

$$\delta = \frac{\sqrt{\ln 2}}{2\pi BT} \qquad (7)$$

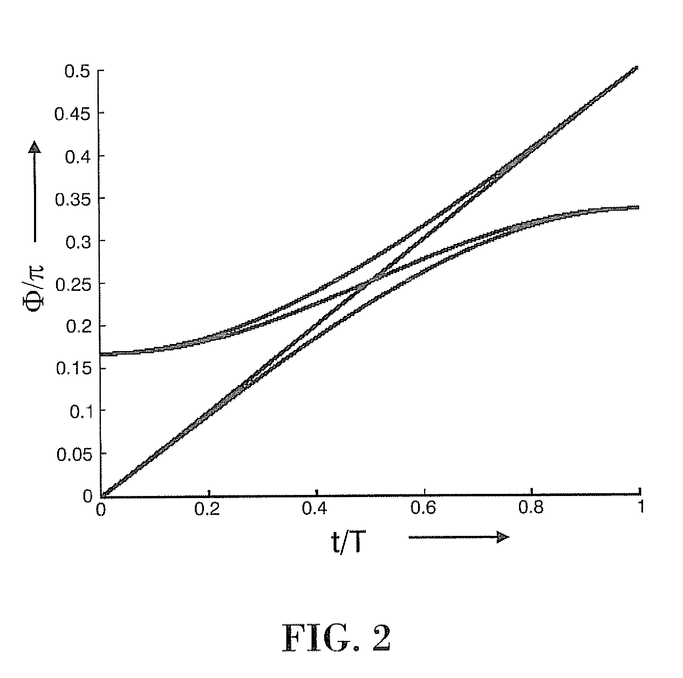

The BT product parameter represents bandwidth of the spectrum of g(t) multiplied by T. This nonnegative scalar reflects the tradeoff between bandwidth reduction and increase of intersymbol interference. In this case from (4), the phase shift during the symbol duration is not necessarily $\pi/2$. It can be lower, and it depends not only on the current bit but also on adjacent bits. Figure 2 shows the four possible phase paths in the GMSK phase trajectory. It can be observed that the phase shift can be approximately bounded by $\pi/6 < |\Delta\phi k| < \pi/2$.

Non-coherent multiplication of the received signal s(t) with the orthogonal local oscillator signals $2 \cdot \cos(\text{WLot-}\varphi)$ and $2 \cdot \sin(\text{WLot-}\varphi)$ in the I and Q branches of the receiver yields low pass quadrature signals:

$$i(t) = \sqrt{2S}\cos\left(\Delta\omega t + \phi(t) - \varphi\right)$$

$$q(t) = -\sqrt{2S}\sin\left(\Delta\omega t + \phi(t) - \varphi\right) \tag{8}$$

The high frequency components at WRF+WLO at the output of the quadrature mixer are rejected by the subsequent channel filter. The radian frequency offset $\Delta w =$ WRF-WLO may represent the IF frequency in a Low-IF receiver or the frequency error in a Zero-IF receiver. Constant $\varphi$ reflects the phase incoherence between s(t) and the local oscillator. Conventionally, signals i(t) and q(t) are digitized by multibit ADCs and then detection is done digitally. However, the resolution and speed requirements of these ADCs leads to significant power consumption, as previously mentioned. Presently, instead of quantizing the amplitude of the in-phase i(t) and quadrature q(t) signals and then digitally computing the quantized phase, the phase of the input signal itself is quantized.

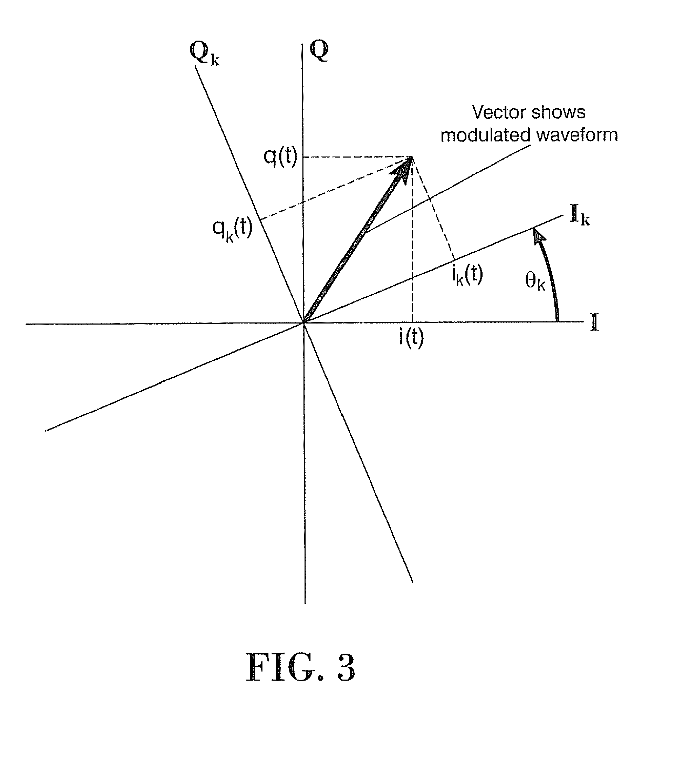

To understand the way phase is quantized, first consider the vector representation of the angular modulation in the IQ-plane, shown in figure 3. Let's assume for the moment that $\Delta w = 0$. The projection of this vector in the horizontal and vertical axes correspond to the in-phase i(t) and quadrature q(t) components, and its instantaneous angle with the horizontal axis is $\pi(t)-\varphi$. In analog modulations, $\phi(t)$ should be recovered. Fortunately, in digital modulations the exact value of $\phi(t)$ is not necessary and only the direction of the phase shift is required for decoding the transmitted symbol. A positive shift represents a 1 and a negative shift a 0. Thus, quantizing the phase in enough intervals (sectors in the complex IQ plane), detection can be done efficiently.

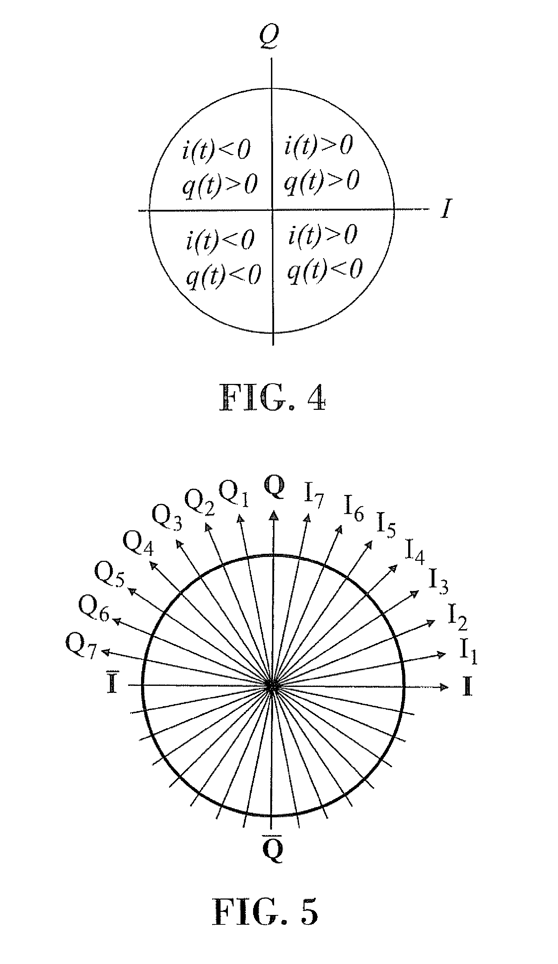

First imagine that we want to divide the phase plane in 4 sectors corresponding to the 4 quadrants, as shown in figure 4. In that case, just by sensing the polarity of i(t) and q(t) it can be determined in which quadrant the vector lies, as shown in figure 4. Transition from adjacent quadrants takes place at the zero crossings of either i(t) or q(t). Thus i(t) or q(t) could withstand strong distortion provided the position of the zero crossings is not modified, Stated differently, amplitude hard-limiters can be employed.

This quantization is able to detect modulations where phase shifts in a bit duration T are always higher than $\pi/2$, by detecting transitions along quadrants of the modulation vector. Transitions from quadrant to quadrant are detected when either i(t) or q(t) change sign, i.e., at the zero crossings of either i(t) or q(t). For instance, transition from the first to the second quadrant happens at the zero crossing of i(t) when q(t) is positive. This positive phase shift is interpreted as the transmission of a bit 1. However, phase shifts below $\pi/2$ during T could not be enough to move the modulation vector outside a quadrant and hence could not be detected. This is unfortunately the case in GMSK, as shown in figure 2 and hence a finer quantization of the instantaneous phase (i.e., more sectors in the IQ plane) is required. A finer quantization improves the BER for a given SNR, but also leads to a more complex implementation of the demodulator. Hence a tradeoff is required.

Figure 5 shows, for instance, a division of the instantaneous phase in 32 sectors. This corresponds to a quantization of the phase in 32 levels.

Each sector is delimited by two axes. As shown in figure 3, each axis $I_K$ (k=0, 1, ..., N-1) is forming an angle with the horizontal axis of $\theta_k = \pi/(2N)$ with N=8 in this example. As can be seen, the number of axes in the complex plane is 2N and the number of sectors is therefore 4N. Note that $I_0$ is the I axis. Hence the projection of the modulation vector on axis $I_k$ is a linear combination of i(t) and q(t) given by:

$$i_k(t) = i(t) \cdot \cos\theta_k + q(t) \cdot \sin\theta_k \tag{9}$$

The corresponding $Q_k$ axis is orthogonal to this $I_k$ axis (Q0 is the Q axis) and therefore projection of the modulation vector on axis $Q_K$ is:

$$q_k(t) = -i(t) \cdot \sin\theta_k + q(t) \cdot \cos\theta_k \qquad\qquad (10)$$

Thus, for instance, detection of the transition of the modulation vector from the adjacent sectors in the first quadrant separated by I3 is sensed at the zero crossing of q3(t) when $i_3(t)$ is positive, and depending on the change of sign of q3(t) the phase shift is clockwise or counterclockwise.

A possible implementation of a demodulator 1 based on this technique for N=4 (i.e. 8 axes) is shown in figure 6. First, a linear combining stage 3 generates the 2N signals (linear combinations) ik(t) and qk(t) (k=0, 1, .., N-1) given by equations (9) and (10). In this particular example, N=4, as mentioned. Since just knowing the sign of such signals is enough to track the phase shifts in the quantized phase plane of figure 5, amplitude hard-limiters 4-1 4-2 4-3 4-4 4-5 4-6 4-7 4-8 are applied (whose output detects the sign of the input). The output of these amplitude hard-limiters 4-1 4-2 4-3 4-4 4-5 4-6 4-7 4-8 is represented in figure 6 as Code0 Code1 Code2 Code3 Code4 Code5 Code6 Code7.

To understand the scheme of figure 6, note that the hard-limited output Code0 Code1 Code2 Code3 Code4 Code5 Code6 Code7 of the linear combiner can be considered as a thermometric code that encodes the sector in figure 5, where the phase lies at a given instant. To do so, the thermometric code is converted to binary by a decoder 5. The 2N outputs Code0 Code1 Code2 Code3 Code4 Code5 Code6 Code7 of the amplitude limiters 4-1 4-2 4-3 4-4 4-5 4-6 4-7 4-8 are the 2N inputs of the decoder 5. Decoder 5 has an M-bit output Data0 Data1 Data2 Data3, which represents the binary word which corresponds to the thermometric input code, where M=$\log_2$(4N)=4 in this example. Each of these M output ports outputs one bit. Table 1 shows the correspondence between the sector number (binary) and the polarity of the ik(t) and qk(t) signals (thermometric).

Table 1

| Sector | sgn($q_3(t)$) | sgn(qw(t)) | sgn($q_1(t)$) | sgn($q_0(t)$) | sgn($i_3(t)$) | Sgn($i_2(t)$) | sgn($i_1(t)$) | sgn($i_0(t)$) |
|--------|------|------|------|------|------|------|------|------|
| 0  | 0 | 0 | 0 | 0 | 0 | 0 | 0 | 0 |
| 1  | 0 | 0 | 0 | 0 | 0 | 0 | 0 | I |
| 2  | 0 | 0 | 0 | 0 | 0 | 0 | 1 | 1 |
| 3  | 0 | 0 | 0 | 0 | 0 | 1 | 1 | I |
| 4  | 0 | 0 | 0 | 0 | 1 | 1 | 1 | 1 |
| 5  | 0 | 0 | 0 | 1 | 1 | 1 | 1 | I |
| 6  | 0 | 0 | 1 | 1 | 1 | 1 | 1 | 1 |
| 7  | 0 | 1 | 1 | 1 | 1 | 1 | 1 | 1 |
| 8  | 1 | 1 | 1 | 1 | 1 | 1 | 1 | 1 |
| 9  | 1 | 1 | 1 | 1 | 1 | 1 | 1 | 0 |
| 10 | 1 | 1 | 1 | 1 | 1 | 1 | 0 | 0 |
| 11 | 1 | 1 | 1 | 1 | 1 | 0 | 0 | 0 |
| 12 | 1 | 1 | 1 | 1 | 0 | 0 | 0 | 0 |
| 13 | 1 | 1 | 1 | 0 | 0 | 0 | 0 | 0 |
| 14 | 1 | 1 | 0 | 0 | 0 | 0 | 0 | 0 |
| 15 | 1 | 0 | 0 | 0 | 0 | 0 | 0 | 0 |

If this binary code Data0 Data1 Data2 Data3 is stored in an array of flip-flops (FFs) FF1 FF2 FF3 FF4, after T seconds, the input Data0 Data1 Data2 Data3 of the flip-flops FF1 FF2 FF3 FF4 represents the sector where the phase lies after the reception of bit dk, whereas the output Data0' Data1' Data2' Data3' of the flip-flops corresponds to the code of the sector where the phase was just before the reception of bit dk. Thus, comparing such codes (Data0 Data1 Data2 Data3; Data0' Data1' Data2' Data3'), the direction of the phase shift produced by bit dk can be obtained, and hence bit dk can be decoded. Such comparison is done by means of comparison means 6, which can be implemented using either an adder or a subtractor.

Preferably, comparison means 6 is implemented by a subtractor. Such subtractor is an M-bit subtractor, whose output is therefore an M-bit word (M=4 in this case) out0 out1 out2 out3. The most significant bit (MSB) of the resulting digital word, outputted at out3 corresponds to dk. If it is "1", it corresponds to a counter-clockwise phase shift, whereas if it is "0", it corresponds to a clockwise phase shift. That most significant bit out3 enters a further flip-flop 9 for being stored.

Note that the circuit of figure 6 is simpler than the proposal mentioned in the State of the Art, since it saves 2 $(N-1)-\log_2 N$ flip-flops (e.g. half of the flip-flops if N=4) and one thermometer to binary decoder. It is thus suited for low silicon area and low power consumption.

Furthermore, the flip-flops FF1 FF2 FF3 FF4 are preferably clocked from a signal synchronized with the data, in order to sense the phase of the incoming signals at the proper instants. A data synchronization stage 7 is then required. Hence the data synchronization circuitry must also be considered when evaluating the complexity of this demodulator.

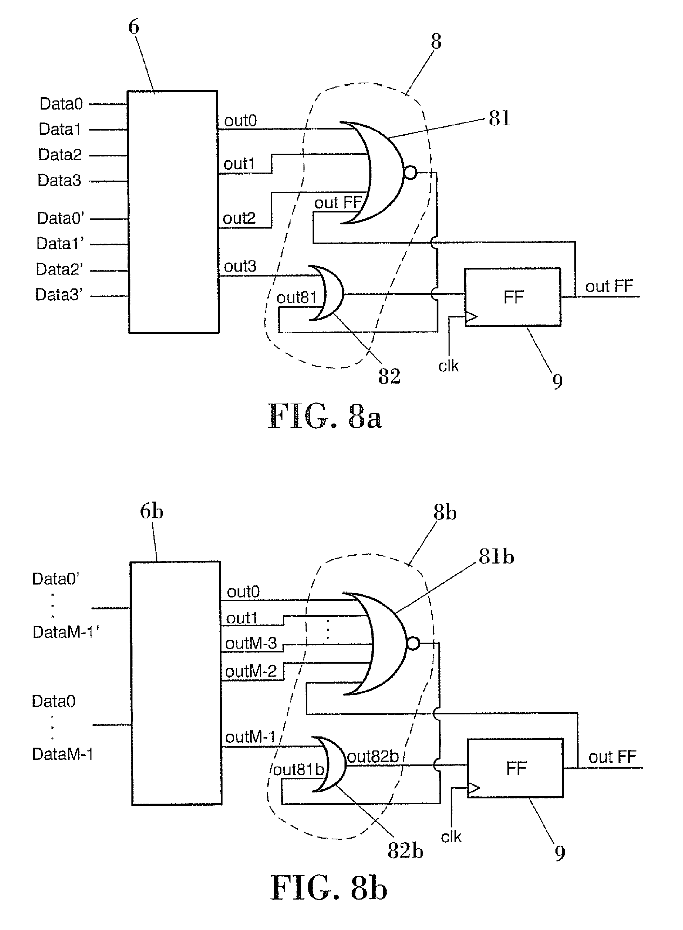

Preferably, the performance of the detector is increased if a post-processing stage 8 is used. This post-processing stage 8 is illustrated in figure 8a.

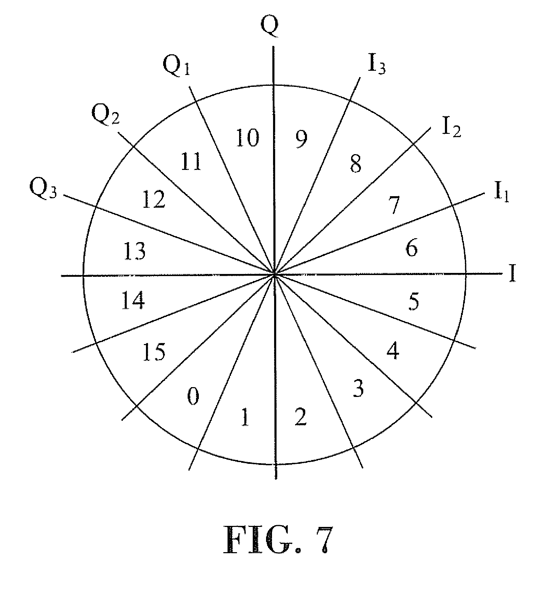

The number N is usually chosen as a power of two, in order to simplify the digital logic. The larger the number N, the more the complexity of the demodulator increases, but a more accurate quantization of the instantaneous phase is achieved. The example of figure 6 shows N=4. Simulations for a Zero-IF receiver have been carried out with Matlab/Simulink system level and they suggest that a proper choice is N=4 for a GMSK signal with h=0.5 and BER<0.1%. Hence, 2N=8 axes are employed, that divide the IQ plane in 16 sectors. This is illustrated in figure 7.

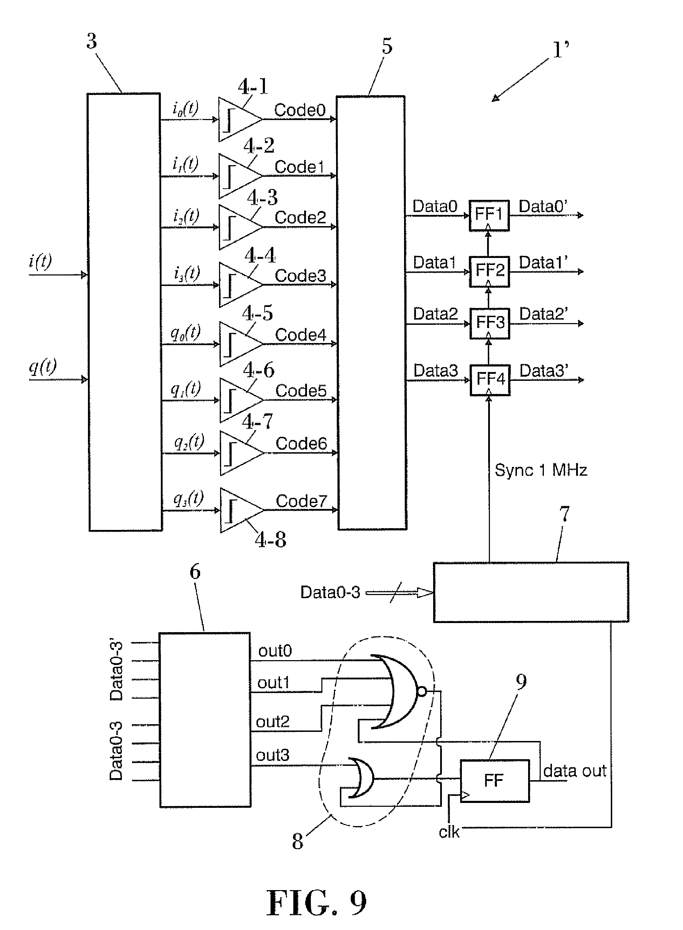

Figure 9 shows a preferred implementation of the demodulator 1 of figure 6. The demodulator 1' of figure 9 includes the already mentioned synchronization stage 7 and post-processing stage 8.

Coming back to the implementation of the demodulator of figures 6 and 9, the signals at the output of the linear combiner 3 are the following:

$$\theta_k = \pi/(2N) \text{ for } k=0, 1, \ldots, N-1$$

In the particular example wherein N=4, $\theta_k = k\pi/8$ for k=0,1, 2, 3.

From equation (9):

$$i_0(t) = i(t)$$

$$i_1(t) = i(t) \cdot \cos(\pi/8) + q(t) \cdot \sin(\pi/8) \approx 0.924 \cdot i(t) + 0.383 \cdot q(t)$$

$$i_2(t) = i(t) \cdot \cos(\pi/4) + q(t) \cdot \sin(\pi/4) \approx (1/\sqrt{2}) \cdot [i(t) + q(t)]$$

$$i_3(t) = i(t) \cdot \cos(3\pi/8) + q(t) \cdot \sin(3\pi/8) \approx 0.383 \cdot i(t) + 0.924 \cdot q(t)$$

and from equation (10):

$$q_0(t) = q(t)$$

$$q_1(t) = q(t) \cdot \cos(\pi/8) - i(t) \cdot \sin(\pi/8) \approx 0.924 \cdot q(t) - 0.383 \cdot i(t)$$

$$q_2(t) = q(t) \cdot \cos(\pi/4) - i(t) \cdot \sin(\pi/4) \approx (1/\sqrt{2}) \cdot [q(t) - i(t)]$$

$$q_3(t)=q(t)\cdot\cos(3\pi/8)-i(t)\cdot\sin(3\pi/8)\approx 0.383\cdot q(t)- 0.924\cdot i(t)$$

As already mentioned, Table 1 relates the polarity of each ik(t) and qk(t) signal with the sector in figure 7. It is coded as a 1 for a positive value and as a 0 for a negative one. This code is converted to binary form (i.e. to the sector number) with the decoder 5 of figure 6 according to the correspondence in Table 1.

To illustrate the operation of the demodulator, imagine that a certain bit shifts the instantaneous phase from sector 6 to sector 9 in figure 7 during time T. It is a positive phase shift (i.e., counter-clockwise) thus corresponding to a bit 1. At the beginning of the bit duration T, $\phi(t)$ is in sector 6, so at the output of the amplitude hard-limiters 4-1 4-2 4-3 4-4 4-5 4-6 4-7 4-8 we have the thermometric code corresponding to such sector, i.e., 0011 1111 from Table 1. This value, once decoded into a binary value of 4 bits (0110), is stored in the array of flip-flops FF1 FF2 FF3 FF4. After time T, the output of the amplitude hard-limiters 4-1 4-2 4-3 4-4 4-5 4-6 4-7 4-8 corresponds to the coded value of sector 9, i.e., 1111 1110. This value is decoded into its binary code 9 (1001). Both binary codes are input to the comparison means 6, which, in the example of figures 6 and 9, is a subtractor. Subtractor 6 performs the binary subtraction 6-9=-3 (i.e. 0110-1001=0110+0111=1101). Thus the output of flip-flop 9 stores the most significant bit (MSB) 1, which corresponds to the transmitted bit.

Going back to the data synchronization stage 7 of figure 9, the clock of the array of flip-flops FF1 FF2 FF3 FF4 should be slightly delayed with respect to the clock of the output flip-flop 9 in order to store the MSB of the phase difference just before latching the current phase code. This small delay can be readily implemented by an even number of NOT gates. Since the $T_{bit}$ = 1/Bitrate and the $T_{bit}$ is approximately 1 $\mu$s, the mentioned slight delay can be approximately 1 ns. In other words, in relative terms, the delay between the clock of the array of flip-flops FF1 FF2 FF3 FF4 and the clock of the output flip-flop 9 should be of around three orders of magnitude smaller than the $T_{bit}$.

As already mentioned, the performance of the demodulator is increased if a post-processing stage 8 is used. The demodulator has been extensively simulated for different SNR values in the range of 4 to 20 dB and including several non-idealities, such as lack of synchronization, frequency offset, I/Q mismatch, errors in the linear combinations of i(t) and q(t), effect of interfering signals and effect of AC coupling on the signal path. Analyzing the errors of the demodulator, it has been found out that most of them are produced for data sequences of the type "101" or "010". These data sequences are sequences of bits which form part of the bits flow which modulates the carrier at the transmitter side. These sequences lead to very small phase shifts when the middle bit is being detected, and when corrupted by noise these phase shifts may not be enough for moving the phase out of a sector (figure 7). This is due to the properties of the Gaussian pre-filtering in GFSK modulations: Let's assume that a bit "0" is transmitted at the transmitter side. This bit "0" has therefore to be recovered at the receiver side. If a GFSK modulation is used and the previous and subsequent bits are "1" (that is to say, the transmitted sequence of bits is "101"), the phase variation of the signal which arrives at the receiver side substantially at the time instant wherein said bit "0" should be detected may be small enough not to lead to a change in the sector in the IQ plane where the instantaneous phase lies. As a consequence, the zero-crossing detector might fail. In this particular example, it has been observed that the output of the circuit is fortunately "0". This corresponds to the transmitted "0" in the sequence "101". However, if the transmitted sequence is "010", the zero-crossing detector fails in its attempt to detect said bit "1", providing a "0" at its output. When the implementation of the demodulator is done as shown in figures 6 or 9, the same code (the same digital word) appears at the input (Data0 Data1 Data2 Data3) and output (Data0' Data1' Data2' Data3') of the array of flip-flops FF1 FF2 FF3 FF4, and therefore the output of the subtraction yields "0000".

The same problem arises when the implementation of the demodulator implies a different value of N (for example, N=8). The output bit (the most significant bit (MSB)) is decoded as "0". As already said, this is, by chance, the right output for the case "101" but it is not the case for "010".

In order to avoid this error, the demodulating stage 1 1' comprises a post-processing stage 8 8b as detailed in figures 8a and 8b.

As shown in figure 8a, a post-processing stage 8 comprises a NOR gate 81 and an OR gate 82. NOR gate 81 has four inputs, three of which are the three less significant output bits of subtractor 6. The fourth input outFF of the NOR gate 81 is the output of flip-flop 9. OR gate 82 has two inputs: one of them is the most significant output bit out3 of subtractor 6 and the second one is the output out81 of the NOR gate 81. The output out82 of this OR gate 82 is the input directed to flip-flop 9. Alternatively, NOR gate 81 can have five inputs instead of four, corresponding to all the output bits of subtractor 6 plus the output out FF of flip-flop 9. It is not the preferred implementation of the current invention because "1000" does not belong to the normal operation of the detector, hence the most significant bit is not required to detect a near zero phase shift.

When it is detected that the output out0 out1 out2 out3 of the subtractor 6 is "0000" (which cannot happen in normal operation because it would mean that during a certain bit period the phase of the modulated signal had not varied, which is impossible), the complementary (*bit*) of the former bit is forced as output bit. This means that it is supposed that a sequence of modulated signal to be detected corresponds to the transmitted sequence "010" or "101" and, at that moment, the middle bit ("1" in the case of "010" and "0" in the case of "101") is tried to be demodulated bearing in mind that the demodulator can make a mistake. Hence, the post-processing stage 8 forces the detection of the complementary bit of the formerly detected one. That is to say, if a sequence "010" arrives, even though the middle "1" is not correctly detected, the post-processing stage 8 forces a "1" corresponding to the middle bit (in other words, it forces a bit which is the complementary one to the first bit ("0") of the sequence "010". The same applies, mutatis mutandis, when a sequence "101" arrives.

Figure 8a shows the post-processing stage 8 inserted between the subtractor 6 and the flip-flop 9. It only requires 2 logic gates and does not affect normal operation.

Matlab/Simulink system simulations including this post-processing stage 8 have been carried out. They show that up to 5-dB less SNR can be used to achieve a 0.1% BER as compared to the detector disclosed in the State of the Art.

Figure 8b shows the post-processing stage 8b for a general demodulator having a sequence of $M=\log_2(4N)$ bits as input to the comparison means 6b (2N axes are employed that divide the IQ plane in 4N sectors). Like in figure 8a, it comprises a NOR gate 81b and an OR gate 82b. NOR gate 81b has M inputs, M-1 of which are the M-1 less significant output bits of comparison means 6b. The M-th input outFF of the NOR gate 81b is the output of flip-flop 9. OR gate 82b has two inputs: one of them is the most significant output bit outM-1 of comparison means 6b and the second one is the output out81b of the NOR gate 81b. The output out82b of this OR gate 82b is the input directed to flip-flop 9. This post-processing stage 8b works in the same way as the already described stage 8. When it is detected that the output out0 out1 ... outM-1 of the comparison means (preferably a subtractor) 6b "000...0" (which cannot happen in normal operation because it would mean that during a certain bit period the phase of the modulated signal had not varied, which is impossible), the complementary ($\overline{bit}$) of the former bit is forced as output bit.

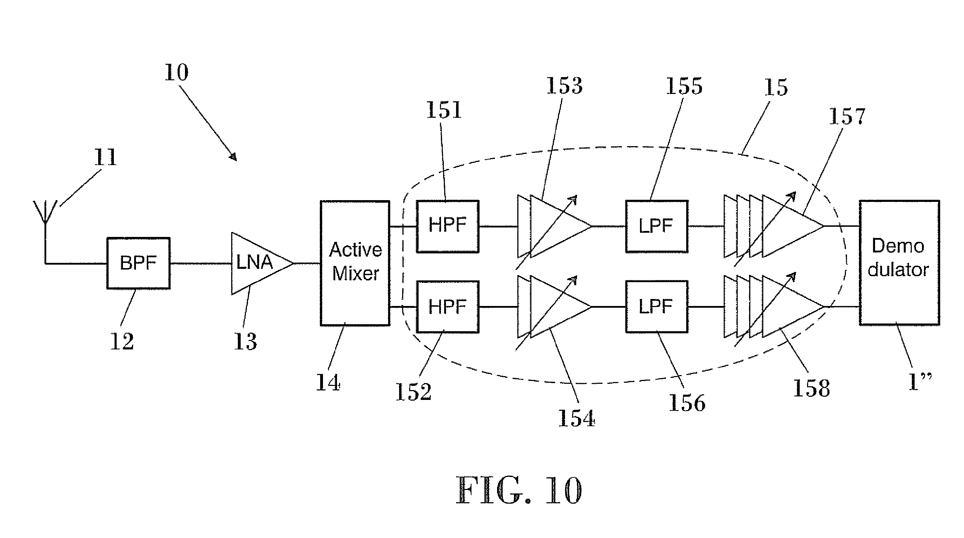

Finally, some considerations about the gain control of a complete receiver are discussed. Figure 10 shows a simplified diagram of a wireless receiver 10 according to the invention, including the amplification and filtering stages in the signal path. Block 1' represents the stages of demodulation, decoding and detection of the invention, explained in detail in figures 6 and 9. This receiver 10 belongs to a wireless system. It comprises one or more receiving antennas 11, followed by a stage of Zero-IF down conversion 14. The receiver is thus a Zero-IF receiver. Before reaching the mixer for Zero-IF down conversion 14, the received signal passes through a band-pass filter 12 and a low noise amplifier (LNA) 13. The signal delivered to the baseband section 15 of the receiver 10 may typically include adjacent channels, in-band and out-of-band blockers, that can dominate (by up to 40-60dB) the desired signal to be processed. Hence analog baseband blocks are required to exhibit not only a target in-band dynamic range, but excellent linearity for out-of-band signals. This is because nonlinear blocks processing with out-of-band-signals would result in an intermodulation whose product components would fall in the signal band, corrupting the signal quality.

The baseband section 15 of a wireless receiver 10 is formed by a combination of amplification 153 154 157 158 and filtering stages 151 152 155 156. The amplifiers 153 154 157 158 increase signal amplitude. Filters 151 and 152 are high-pass filters used for eliminating the strong dc component which can appear after the active mixer 14 and could therefore saturate the next amplifying stage 153 154. Filters 155 156 reduce the power of the out-of-band blockers in order to increase the swing available for the useful signal.

The receiver 10 of figure 10 comprises two filtering stages. A RC high-pass filter 151 152 removes the slowly-varying DC offset coming from the RF section and part of the Flicker noise, and according to the simulations of the demodulator, it should have a cutoff frequency in the order of 10kHz. The channel filters 155 156 help reducing the level of interferences out of the signal band. Simulations show that a good value for the cutoff frequency is in the order of 550kHz to 650kHz. A 3rd order Butterworth filter has been used for the simulations, although other filter approximations can be evaluated, e.g. to decrease ISI. Note that although the limiting amplifier is shown before the demodulator, the linear combinations of the I and Q signals should be generated before amplitude limitation, in order to avoid clipping.

Concerning the gain stages, a preamplification stage 153 154 prior to the channel filter is used to relax its noise requirements, and limiting amplifiers after it 157 158. Due to the wide input dynamic range that the receiver must withstand, a gain control strategy needs to be established. The most important feature of such gain control is that due to the amplitude hardlimiters at the input of the demodulator, the input of the detector can vary in a wide dynamic range and demodulation still operates properly. Hence the gain tuning can be made in a few discrete steps, and what is actually limiting the range where the gain can be constant is the saturation in the previous stages, mainly the maximum output range of the filter, and the dynamic range of the RSSI circuit.

The circuits of figures 6 and 9 have been simulated using Matlab/Simulink. The simulation has been completely done at baseband to reduce simulation time. A random bitstream at a data rate of 1 Mbps is applied to a GFSK modulator with h=0.5 and BT=0.5, which generates the complex envelope of such modulated signal, i.e., i(t)+jq(t). This signal can be optionally multiplied by a complex exponential $\exp(j2\pi \cdot \Delta f \cdot t)$ to simulate the effect of a frequency error of value $\Delta f$. Then the signal enters a pre-processing block that contains the base-band section of the Zero-IF receiver, wherein white Gaussian noise is added to the complex signal, and then quadrature components i(t) and q(t) are extracted. Each one is processed by a first-order high-pass filter (HPF) to remove DC offset, then preamplified, filtered by a third-order Butterworth low-pass channel filter (LPF) and finally amplified. The amplitude limitation is included in the demodulator block.

For comparison purposes, 4 different detectors (three of them of the zero-crossing type a fourth, different one) are implemented. First, a zero-crossing demodulator according to figure 6 with N=2 (4 axes) is simulated. Second, the same demodulator (by Samadian) but with N= 4 (8 axes) has been simulated. Third, a conventional model of a cross-differentiate multiply (CDM) demodulator has been simulated. Finally, a demodulator with N=4 (8 axes) with a post-processing circuit 8 of figure 9 has been simulated.

The choice of the cutoff frequency of the HPF and the channel filter is critical. The HPF introduces distortion since it removes part of the signal spectrum of the quadrature components of the GFSK modulation. This distortion is reduced using low cutoff frequencies, but then the silicon area required to implement it and the start-up time increase. The channel filter also removes part of the signal spectrum and introduces group delay. A larger cutoff frequency in the channel filter reduces these problems, but then more noise power reaches the demodulator and the rejection of close interferences decreases. Hence the choice of the cutoff frequencies of these filters is critical.

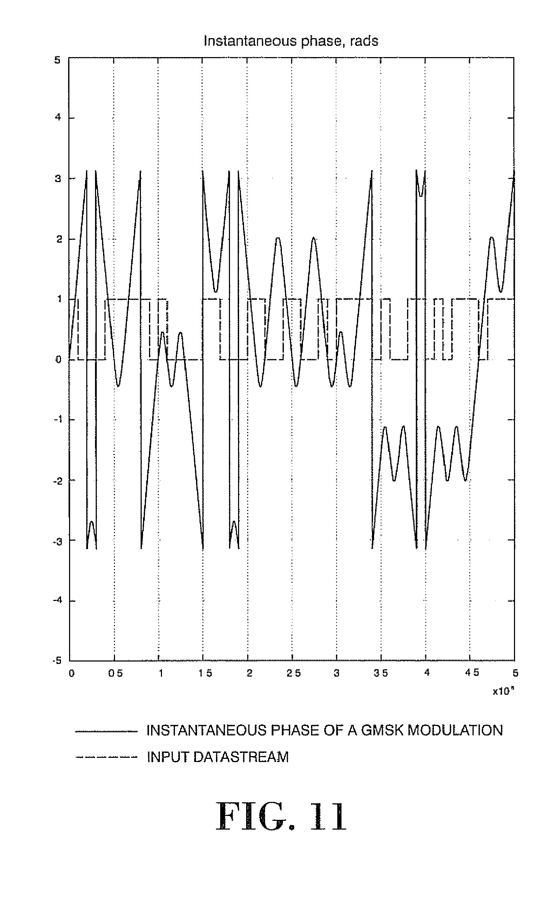

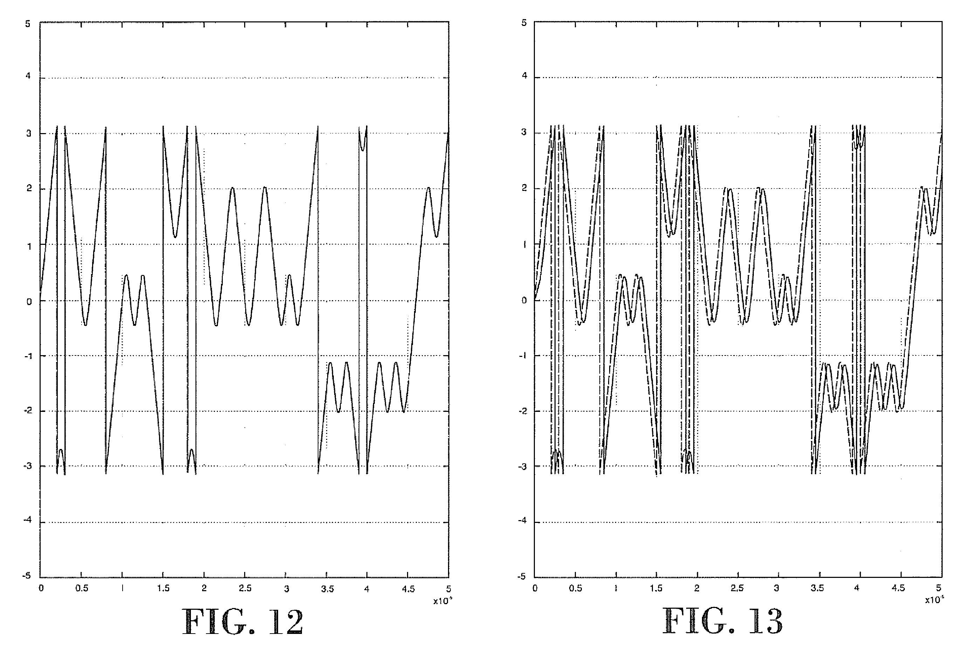

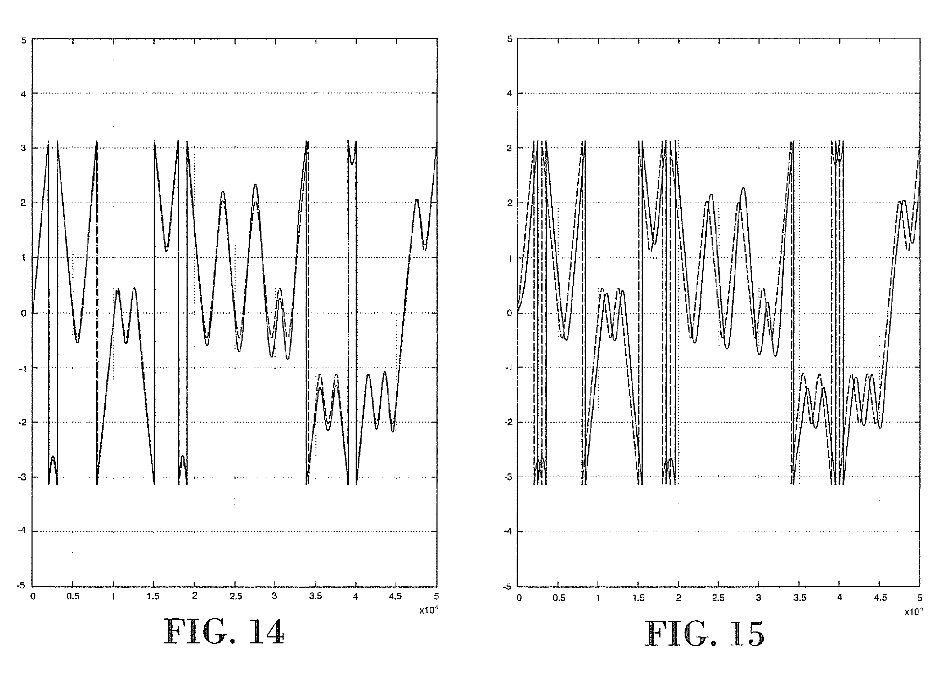

To illustrate these issues, figure 11 shows the input data and the corresponding instantaneous phase $\phi(t)$ =arctan(q(t)/i(t)) of the GMSK modulation. Note that certain combinations of input bits lead to very small phase shifts, as shown in figure 2. For instance, when a single bit 1 or 0 has complementary adjacent bits (i.e., sequence 010 or 101) the next phase shift in the time T of the middle bit is approximately 0. These bits are the most prone to error in the demodulator. These possible errors are mitigated by the post-processing stage 8 of figure 9. Figure 12 shows the instantaneous phase (vertical axis) at the input and output of the pre-processing block 8. The horizontal axis represents the time, in seconds. Previously, the HPF was removed and the bandwidth of the channel filter was set to 10MHz, in order not to show their distorting effect. The Eb/No was set to a very high value (120dB) in order not to be influenced by noise. As expected, both phase curves overlap, showing that no distortion appears. The effect of reducing the cutoff frequency of the LPF to 650kHz is shown in figure 13, wherein also the vertical axis represents the phase, in radians and the horizontal one represents the time, in seconds. Although little distortion is introduced, a significant group delay of approximately 500ns appears. Besides, the effect of the HPF is seen in figure 14. In this case, the HPF has a cutoff frequency of 10kHz, and the cutoff frequency of the LPF is again 10MHz. In this case, the phase is not significantly delayed, but it is noticeably distorted. The combined effect of both filters can be seen in figure 15 (Instantaneous phase at the input and output of the baseband preprocessing section, with negligible noise (Eb/No=120dB), HPF with cutoff frequency of 10kHz and LPF of 650kHz. Vertical axis: phase (rads) Horizontal axis: Time (s)), where both distortion and delay are noticeable.

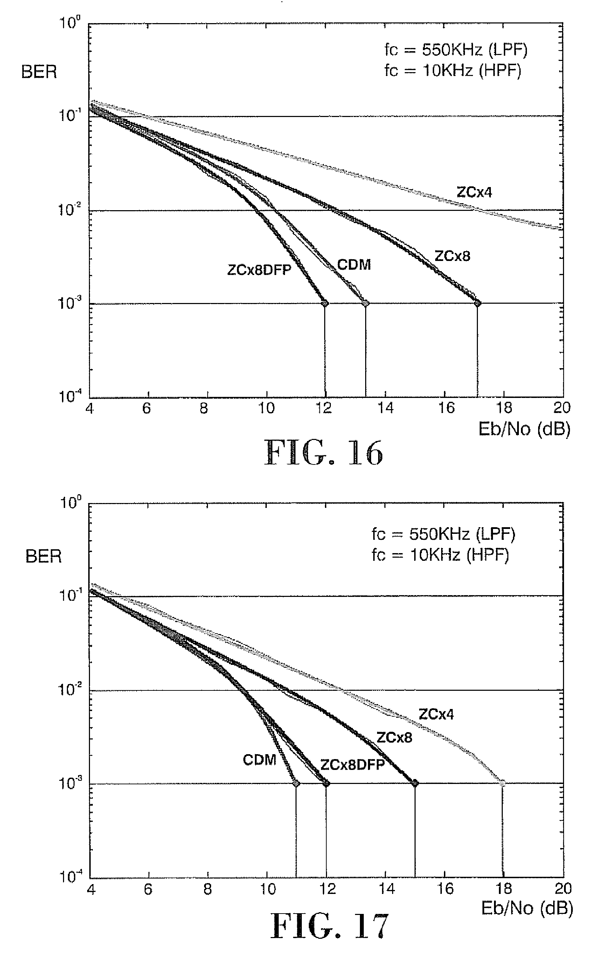

Figure 16 shows the BER versus Eb/No for simulated detectors. The -3dB cutoff frequency of the channel filter is 550 kHz, and that of the HPF is 10kHz. It can be seen that the worst case corresponds to the zero-crossing demodulator of figure 6 with only 4 axes (N=2). The phase quantization that achieves this detector is not enough for this modulation. The version with 8 axes (N=4) achieves a 0.1% BER, but a high Eb/No>17dB. The performance of the ideal model of cross-differentiate multiplier (CDM) detector is better. Finally, the performance of the 8 axes (N=4) modulator including the simple post-processing 8 of figure 9 achieves a 0.1% BER for an Eb/No>12dB.

However, the results of figure 16 are not optimal, since no data synchronization is provided in the demodulators. Hence the group delay observed in figure 15 precludes the optimal operation of the demodulators. In practice, a data clock recovery circuit is used to generate the output data of the detector, and in that case better results are achieved.

Despite the fact that more complex data synchronization models can be implemented in Simulink, a first estimation of the savings caused by a good synchronization has been done by manually setting a delay according to that observed in the received instantaneous phase. The results are shown in figure 17. The duration of the impulse response of the Gaussian filter, which took the default value of 4T in former simulations, is set in this case to 3T, in order to more easily compensate for this delay. Note that in this case the CDM detector is slightly better than the 8 axes demodulator with post-processing stage 8 (figure 9). However, the CDM model contains several completely ideal analog blocks (derivators, multipliers, squarers, etc.). The almost digital 8 axes demodulator with post-processing 8 is much simpler for a similar performance.

As can be appreciated, a better performance of 5 dB is achieved thanks to the post-processing stage 8 of figure 9.

In this text, the term "comprises" and its derivations (such as "comprising", etc.) should not be understood in an excluding sense, that is, these terms should not be interpreted as excluding the possibility that what is described and defined may include further elements, steps, etc.

In the context of the present invention, the terms "approximately", "about" and "around" and terms of its family (such as "approximate", etc.) should be understood as indicating values very near to those which accompany the aforementioned term. That is to say, a deviation within reasonable limits from an exact value should be accepted, because the expert in the technique will understand that such a deviation from the values indicated is inevitable due to measurement inaccuracies, etc.

The invention is obviously not limited to the specific embodiments described herein, but also encompasses any variations that may be considered by any person skilled in the art (for example, as regards the choice of components, configuration, etc.), within the general scope of the invention as defined in the appended claims.

**Claims**

1. Demodulator for detecting digital phase or digital frequency modulated signals, wherein said signals comprise an in-phase component (i(t)) and a quadrature component (q(t)), said demodulator comprising:

   - a linear combiner (3) for generating a plurality of 2N linear combinations ($i_k(t)$, $q_k(t)$) of said in-phase component (i(t)) and said quadrature component (q(t)), k being a natural number $0 \leq k < N-1$;

   the demodulator being **characterised in that** it further comprises:

   - a plurality of 2N amplitude limiters (4-1, 4-2, 4-3, 4-4, 4-5, 4-6, 4-7, 4-8), each of them being placed at the output of each of said 2N linear combinations ($i_k(t)$, $q_k(t)$), for providing a digital code (Code0, Code1, Code2, Code3, Code4, Code5, Code6, Code7) associated to the respective linear combination at the output of which they are placed, wherein said digital code (Code0, Code1, Code2, Code3, Code4, Code5, Code6, Code7) represents a phase quantization sector of said linear combination;
   - decoding means (5) for providing a decoded symbol (Data0, Data1, Data2, Data3; Data0, Data1, ..., DataM-1) representing a quantized phase, having $M=\log_2(4N)$ bits, each of said M bits being outputted in parallel;
   - a bank of M flip-flops (FF1, FF2, FF3, FF4), each of them being placed at the output of each of the M outputted bits (Data0, Data1, Data2, Data3; Data0, Data1, ..., DataM-1), for delaying (Data0', Data1', Data2', Data3'; Data0', Data1', ..., DataM-1') said M-bit symbol previously outputted;
   - comparison means (6, 6b) for comparing said M-bit decoded symbol (Data0, Data1, Data2, Data3; Data0, Data1, ..., DataM-1) to said delayed M-bit decoded symbol (Data0', Data1' ..., DataM-1');
   - a flip-flop (9) placed at the output of said comparison means (6, 6b) for selecting a most significant bit (out3; out-1), thus detecting the data signal.

2. Demodulator according to claim 1, wherein said comparison means (6, 6b) is an adder.

3. Demodulator according to claim 1, wherein said comparison means (6, 6b) is a subtractor.

4. Demodulator according to any preceding claim, wherein said decoding means (5) comprises a thermometer-to-binary decoder.

5. Demodulator according to any preceding claim, wherein said digital phase or digital frequency modulated signal is a GFSK signal.

6. Demodulator according to any preceding claim, further comprising a post-processing stage (8, 8b) at the output of said comparison means (6, 6b).

7. Demodulator according to any preceding claim, further comprising a synchronization stage (7).

8. Zero-IF receiver (10) comprising a demodulator according to any preceding claim.

9. Zero-IF receiver according to claim 8, further comprising a zero-IF down conversion stage (14) configured for converting a received signal into said in-phase component (i(t)) and said quadrature component (q(t)).

10. Zero-IF receiver according to either claim 8 or 9, said receiver being a wireless receiver.

FIG. 1

FIG. 2

FIG. 3

FIG. 4

FIG. 5

Code0
Code1
Code2
Code3
Code4
Code5
Code6
Code7

4-1
4-2
4-3
4-4
4-5
4-6
4-7
4-8

$i_0(t)$
$i_1(t)$
$i_2(t)$
$i_3(t)$
$q_0(t)$
$q_1(t)$
$q_2(t)$
$q_3(t)$

$i(t)$
$q(t)$

3
5

Data0
Data1
Data2
Data3

Data0'
Data1'
Data2'
Data3'

FF1
FF2
FF3
FF4

Sync 1 MHz

1

6

out0
out1
out2
out3

9

## FIG. 6

FIG. 7

**FIG. 8a**

**FIG. 8b**

**FIG. 9**

FIG. 10

EP 2 101 458 A1

Instantaneous phase, rads

INSTANTANEOUS PHASE OF A GMSK MODULATION

INPUT DATASTREAM

# FIG. 11

FIG. 12

FIG. 13

EP 2 101 458 A1

FIG. 15

FIG. 14

FIG. 16

FIG. 17

**Europäisches Patentamt**
**European Patent Office**
**Office européen des brevets**

# EUROPEAN SEARCH REPORT

Application Number

EP 08 10 2486

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | SAMADIAN S ET AL: "DEMODULATORS FOR A ZERO-IF BLUETOOTH RECEIVER" IEEE JOURNAL OF SOLID-STATE CIRCUITS, vol. 38, no. 8, 1 August 2003 (2003-08-01), pages 1393-1396, XP001170979 IEEE SERVICE CENTER, PISCATAWAY, NJ, US ISSN: 0018-9200 * abstract; figures 2,5 * sections II-IV ----- | 1-10 | INV. H04L27/156 H04L27/22 H03D3/00 H03M7/16 |
| X | CHRISTIAN C ENZ ET AL: "Ultra low-power MEMS-based radio for wireless sensor networks" EUROPEAN CONFERENCE ON CIRCUIT THEORY AND DESIGN, 27 August 2007 (2007-08-27), pages 320-331, XP031257750 IEEE, PISCATAWAY, NJ, USA ISBN: 978-1-4244-1341-6 * figures 21,22,24 * sections V, V.B ----- | 1-10 | |

TECHNICAL FIELDS SEARCHED (IPC)

H04L
H03D
H04B
H03K
H03M

The present search report has been drawn up for all claims

| Place of search | Date of completion of the search | Examiner |
|---|---|---|
| The Hague | 28 October 2008 | Faber, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 5469112 A

**Non-patent literature cited in the description**

• **Sohrab Samadian et al.** Demodulators for a Zero-IF Bluetooth Receiver. *IEEE Journal of Solid-State Circuits,* August 2003, vol. 38 (8